(19) Europäisches Patentamt
European Patent Office
Office européen des brevets

(11) **EP 1 312 471 B1**

(12) **EUROPÄISCHE PATENTSCHRIFT**

(45) Veröffentlichungstag und Bekanntmachung des Hinweises auf die Patenterteilung:
**11.03.2009 Patentblatt 2009/11**

(51) Int Cl.:
*B32B 27/10* (2006.01)     *B32B 7/06* (2006.01)
*B32B 7/12* (2006.01)      *B44C 1/17* (2006.01)
*G09F 3/02* (2006.01)      *G03G 7/00* (2006.01)
*B41M 3/12* (2006.01)

(21) Anmeldenummer: 02024153.5

(22) Anmeldetag: **30.10.2002**

(54) **Grafikfolie mit verbesserter Formbeständigkeit**

Grafic film with improved dimensional stability

Film graphique ayant une stabilité dimensionnelle améliorée

(84) Benannte Vertragsstaaten:
**AT BE BG CH CY CZ DE DK EE ES FI FR GB GR IE IT LI LU MC NL PT SE SK TR**

(30) Priorität: **31.10.2001 DE 10153679**

(43) Veröffentlichungstag der Anmeldung:
**21.05.2003 Patentblatt 2003/21**

(73) Patentinhaber: **Felix Schoeller jr Foto- und Spezialpapiere GmbH & Co. KG 49086 Osnabrück (DE)**

(72) Erfinder:
• **Winiker, Robert, Dr. 49086 Osnabrück (DE)**
• **Bothor, Roland, Dr. 52072 Aachen (DE)**

(74) Vertreter: **Cohausz & Florack Patent- und Rechtsanwälte Bleichstraße 14 40211 Düsseldorf (DE)**

(56) Entgegenhaltungen:
EP-A- 0 687 702        EP-A- 1 116 745
US-A- 3 741 841        US-A- 5 154 956
US-A- 6 030 742

**Beschreibung**

Die Erfindung betrifft eine bedruckbare flexible Grafikfolie, die für Werbezwecke nutzbar ist.

Eine sogenannte Grafikfolie besteht im allgemeinen aus einem selbstklebenden Polyvinylchlorid-Film (Vinylfilm) und wird zur Dekoration von Werbeflächen verwendet. Für die Herstellung, den Transport und die Lagerung dieser Folien ist ein Träger notwendig. Hierfür werden aus einem Trägermaterial und einer Trennschicht bestehende Trennpapiere (Release Liner) eingesetzt.

Zur Herstellung von Trennpapieren mit dehäsiven Eigenschaften gegenüber Klebstoffen kann ein Träger aus Papier mit einer Silikonschicht versehen. Um die Penetration des teuren Silikonauftrags ins Papierinnere zu verhindern, muß die Oberfläche des Papiers abgedichtet werden. Als Trägermaterial eignet sich daher ein Papier, das entweder mit einer pigmenthaltigen Schicht versehen oder aber mit einem Polymer beschichtet ist. Ein für diesen Zweck geeignetes Polymer ist Polyolefin verwendet. Durch den Einsatz entsprechender Kühlzylinder bei der Beschichtung des Rohpapiers mittels Extrusion werden hochglänzende Oberflächen erhalten.

Eine solche Grafikfolie wird in großen Formaten, in der Regel in einem mehrstufigen Siebdruckverfahren bedruckt. Das gestrichene oder kunststoffbeschichtete Trägerpapier ist dabei hohen Temperaturen und unterschiedlichen Feuchtigkeitsbedingungen ausgesetzt, so daß Nachteile wie Einrollen an den Rändern oder ein sogenanntes "twist"-curl oder eine Randwelligkeit zu beobachten sind.

Die US 5 154 956 betrifft ein bedruckbares Etikettiermaterial mit einem Trennpapier. Dieses umfasst eine Schicht eines Trennmittels, eines flachen Papierblatts, eines wasserundurchlässigen Klebers und eines verstärkenden geprägten Papierblatts. Die EP 0 687 702 A1 beschreibt mehrschichtige biaxial orientierte Polypropylenfolien für Verpackungszwecke mit einem Verhältnis der Elastizitätsmoduli in Längs- zur Querrichtung von etwa 0,55. Die EP 1 116 745 A1 offenbart ein eine thermoplastische Folie enthaltendes Etikettiermaterial mit einem Releasepapier, einer darauf angeordneten Kleberschicht und der auf der Kleberschicht aufliegenden thermoplastischen Polymerfolie. Diese kann eine biaxial orientierte Polypropylenfolie sein. Die Polymerfolie ist der zu bedruckende Informationsträger. Die US 6 030742 offenbart ein Fotopapier aus einem Rohpapier, das an beiden Seiten des Rohpapiers biaxial orientierte dreischichtige Verbundfolien aus einem thermoplastischen Material aufweist. Auf der Vorderseitenfolie ist die fotografische, Silbersalz enthaltende Schicht aufgebracht. Die US 3 741 841 betrifft ein Verfahren zur Herstellung eines synthetischen Papiers aus zwei aufeinander laminierten Schichten. Eine Basisschicht besteht aus einem unaxial in Längsrichtung orientierten Polypropylen und einem Additiv. Auf die Basisschicht wird eine weitere entgegengesetzt zur Basisschicht orientierte Folie zum Ausbilden einer papierähnlichen Schicht laminiert.

Aufgabe der Erfindung ist es, eine Grafikfolie mit verbesserter Formbeständigkeit bereitzustellen, die sich durch verbesserte Widerstandsfähigkeit gegenüber dem Ausbilden von Welligkeit der mit Klebstoff beschichteten bedruckbaren Grafikfolie und gegenüber Formveränderung des Papiers auszeichnet.

Diese Aufgabe wird gelöst durch eine mehrschichtige Grafikfolie mit einer bedruckbaren selbstklebenden thermoplastischen Folie und einem Trennpapier, wobei das Trennpapier ein Trägermaterial umfaßt, das auf mindestens einer Seite mit einer Polymerfolie versehen ist, die ein Verhältnis der Elastizitätsmodul in Längs- zu Querrichtung (MD/TD) von < 1, gemessen nach DIN 53455, aufweist.

In einer besonderen Ausgestaltung der Erfindung liegt das Verhältnis MD/TD in einem Bereich von 0,30 bis 0,80, besonders bevorzugt von 0,4 bis 0,7.

Der Elastizitätsmodul der Polymerfolie in Längsrichtung beträgt vorzugsweise 1.600 bis 2.500 N/mm$^2$ und in Querrichtung 3.000 bis 4.600 N/mm$^2$ nach DIN 53455. Die Dicke der Polymerfolie kann vorzugsweise 7 bis 50 $\mu$m, insbesondere 10 bis 35 $\mu$m, betragen.

Als Polymerfolie können thermoplastische Polymere eingesetzt werden, vorzugsweise Polyolefine. In einer besonderen Ausgestaltung der Erfindung können biaxial orientierte Polyolefinfolien eingesetzt werden, insbesondere Polypropylenfolien.

Die kommerziell erhältlichen biaxial gereckten Polyolefinfolien werden in einem Coextrusionsprozeß hergestellt und bestehen im allgemeinen aus einer porösen Kernschicht und mindestens einer nichtporösen Oberflächenschicht.

Die Polymerfolie wird erfindungsgemäß auf mindestens einer Seite des Trägermaterials eingesetzt. In einer besonderen Ausgestaltung der Erfindung wird die Polymerfolie auf der Rückseite oder der Vorderseite des Trägermaterials auflaminiert. Sie kann aber auch sowohl auf der Rückseite als auch auf der Vorderseite des Trägermaterials aufgebracht sein. Als Vorderseite des Trägermaterials wird die der bedruckbaren selbstklebenden Folie zugewandte Seite bezeichnet. Die Rückseite ist die entgegengesetzte Seite des Trägermaterials.

Das Trägermaterial kann ein unbeschichtetes, ein gestrichenes oder ein mit einem thermoplastischen Harz beschichtetes Rohpapier sein. Das Flächengewicht des Rohpapiers kann 20 bis 250 g/m$^2$, vorzugsweise 50 bis 200 g/m$^2$, betragen. Als Zellstoffe zur Herstellung des Rohpapiers eignen sich alle Zellulosefasern und synthetische Fasern. Nadelholzzellstoff und Laubholzzellstoff, alkalisch oder sauer aufgeschlossen, können verwendet werden. Alle bekannten Leimungsmittel und Zusatzstoffe, die in der Papierindustrie verwendet werden, können zur Herstellung des Rohpapiers eingesetzt werden.

Das thermoplastische Harz, mit dem das Rohpapier beschichtet ist, ist vorzugsweise ein Polymer aus der Gruppe der Polyolefine wie Polyethylen, Polypropylen, Polymethylpenten, Polybutylen und Copolymere von zwei oder mehreren Olefinen oder deren Mischungen. Insbesondere bevorzugt sind alle Sorten von Polyethylenen wie hochdichtes Polyethylen (HDPE), niederdichtes Polyethylen (LDPE), lineares niederdichtes Polyethylen (LLDPE) und deren Gemische. Weitere geeignete thermoplastische Harze sind Polyester, Polycarbonate, Polyurethane oder Polyamide. Das thermoplastische Harz kann durch Extrusionsbeschichtung aufgebracht werden. Das Auftragsgewicht des auf das Rohpapier aufgebrachten thermoplastischen Harzes kann 5 bis 50 g/m$^2$, vorzugsweise 10 bis 35 g/m$^2$, insbesondere jedoch 15 bis 25 g/m$^2$, betragen.

In einer besonderen Ausgestaltung der Erfindung wird auf die Vorderseite des Rohpapiers eine Polyethylenmischung aufgebracht, die 10 bis 90 Gew.%, insbesondere 30 bis 70 Gew.%, eines Polyethylens hoher Dichte (HDPE) enthält. Das Auftragsgewicht der Beschichtung kann 5 bis 35 g/m$^2$, insbesondere 15 bis 25 g/m$^2$, betragen.

Das durch anschließende Silikonisierung, beispielsweise mit einer für diese Zwecke üblichen wässrigen Silikonemulsion (Silikonauftrag < 1,5 g/m$^2$), des erfindungsgemäß beschichteten Trägermaterials erhaltene Trennpapier wird mit einem Klebstoff beschichtet und auf die bedruckbare thermoplastische Folie oder mit dieser in Deckung gebracht, wodurch eine erfindungsgemäße mehrschichtige Grafikfolie erhalten wird.

Die auf das erfindungsgemäße Trennpapier aufgebrachte bedruckbare thermoplastische Folie kann eine Polyesterfolie oder ein Polyvinylchlorid-Film (Vinylfilm) sein. Sie wird auf das Trennpapier aufgeklebt. Als Kleber können alle üblichen wässrigen und lösungsmittelhaltigen Klebstoffe eingesetzt werden.

Nach dem Bedrucken der Grafikfolie kann das Trennpapier an der Stelle zwischen der Silikonschicht und der Klebstoffschicht abgezogen und die nun selbstklebende Folie auf die vorgesehene Fläche, den permanenten Träger, aufgeklebt werden.

Die folgenden Beispiele dienen der weiteren Erläuterung der Erfindung.

HERSTELLUNG DER GRAFIKFOLIEN

Beispiele 1a

Die Vorderseite eines neutral geleimten Rohpapiers aus 31 Gew.% Nadelholz-Sulfatzellstoff und 69 Gew.% Laubholz-Sulfatzellstoff mit einem Flächengewicht von 120 g/m$^2$ wurde mit einer Polyethylenmischung aus 50 Gew.% LDPE (d=0,915 g/m$^3$) und 50 Gew.% HDPE (d=0,959 g/m$^3$) durch Extrusion beschichtet. Das Auftragsgewicht betrug 24 g/m$^2$.

Auf die Rückseite des Rohpapiers wurde eine biaxial orientierte Polypropylenfolie mit einer Dicke von 30 $\mu$m auflaminiert, wobei beim Laminieren ein Polyethylen niedriger Dichte (LDPE, Dichte 0,915 g/m$^2$) in einer Menge von 12 g/m$^2$ zwischen Rohpapier und Polypropylenfolie mitextrudiert wurde.

Die Polypropylenfolie besteht aus einem mikroporösen Polypropylen-Kern mit einer Dicke von etwa 18$\mu$m, der beidseitig mit einer dünnen, weitgehend porenfreien Polypropylen-Oberflächenschicht mit einer Dicke von etwa 6$\mu$m versehen ist. Das MD/TD-Verhältnis der Elastizitätsmoduli in Längs- und Querrichtung beträgt 0.85. Das laminierte Papier wurde im nächsten Schritt mit Silikon in einer Menge von 0,5g/m$^2$ beschichtet und mit einer Vinylfolie verklebt.

Beispiel 1b

Es wurde verfahren wie in Beispiel 1a mit dem Unterschied, daß ein Rohpapier mit einem Flächengewicht von etwa 90g/m$^2$ eingesetzt wurde.

Beispiel 2a

Die Beschichtung erfolgte wie in Beispiel 1a mit dem Unterschied, daß eine Polypropylenfolie mit einer Dicke von 15 $\mu$m und einem MD/TD-Verhältnis von 0,55 verwendet wurde.

Beispiel 2b

Es wurde wie in Beispiel 2a verfahren mit dem Unterschied, daß ein Rohpapier mit einem Flächengewicht von 90 g/m$^2$ verwendet wurde.

Beispiel 3a

Das Rohpapier aus Beispiel 1a wurde von beiden Seiten mit der gleichen Polypropylenfolie (30 $\mu$m) laminiert, wobei zwischen dem Rohpapier und der Polypropylenfolie jeweils eine Polyethylenschicht aus einem Polyethylen niedriger Dichte (LDPE, Dichte 0,915 g/m²)in einer Menge von 12 g/m² aufgetragen wurde. Anschließend wurde wie in Beispiel 1 beschrieben verfahren.

Beispiel 3b

Die Beschichtung erfolgte wie in Beispiel 3a mit dem Unterschied, daß ein Rohpapier mit einem Flächengewicht von ca. 90 g/m² verwendet wurde.

Beispiel 4a

Die Beschichtung erfolgte gemäß Beispiel 3a mit dem Unterschied, daß eine Polypropylenfolie mit einer Dicke von 15µm und einem MD/TD-Verhältnis von 0,55 verwendet wurde.

Beispiel 4b

Die Beschichtung erfolgte wie in Beispiel 4a mit dem Unterschied, daß ein Rohpapier mit einem Flächengewicht von 90g/m² verwendet wurde.

Vergleichsbeispiel V1

Die Vorderseite eines Rohpapier mit einem Flächengewicht von 120 g/m² wurde mit einem Polyethylen niedriger Dichte (LDPE, 0,915 g/m²)in einer Menge von 24 g/m² durch Extrusion beschichtet. Die Rückseite des Rohpapiers wurde mit einem Polyethylen hoher Dichte (HDPE, 0,940 g/m²) in einer Menge von 12g/m² beschichtet. Die Silikonisierung und das Aufbringen der Vinylfolie erfolgte gemäß Beispiel 1.

Vergleichsbeispiel V2

Es wurde wie in V1 beschrieben verfahren jedoch mit einem Rohpapier von 90g/m².

PRÜFUNG DER GRAFIKFOLIEN

Die Formbeständigkeit der erfindungsgemäßen Grafikfolie wurde bei unterschiedlichen Temperaturen und Luftfeuchtigkeiten untersucht. Hierzu wurde das Curl-Verhalten und ein sogenannter Welligkeitsindex (WI) ermittelt. Die Messung der Welligkeit erfolgte an einer auf einem planen Untergrund ausgerollten Bahn der Grafikfolie.

```
WI = Anzahl Wellen/2m x mittl. Wellenamplitude [mm] x
     mittl. Wellentiefe in Querrichtung [cm]
```

Grafikfolien mit einem WI< 200 [$10^{-5}$m] weisen eine gute Formbeständigkeit unter verschiedenen Feuchtigkeitsbedingungen auf.

Die Curl-Messung erfolgte an den Ecken des zu prüfenden Materials (30 cm x 30 cm) mittels einer Meßlehre. Gemessen wurde die Höhe zwischen der Auflage und der hochstehenden Ecke. Daraus wurde ein Mittelwert in mm ermittelt. Positive Werte bedeuten, daß die Ecken sich zur Vorderseite krümmen, negative Werte bedeuten eine Krümmung zur Rückseite.

Die ermittelten Werte sind in Tabelle 1 zusammengestellt.

Tabelle 1

| Bspl. | Curl 10°C/20%rF [mm] | Curl 23°C/50%rF [mm] | Curl 32°C/80%rF [mm] | Δ Curl [mm] | WI |
|---|---|---|---|---|---|
| 1a | -0,6 | 0,1 | 1,1 | 1,7 | 63 |
| 1b | -0,8 | 0,2 | 1,4 | 2,2 | 73 |
| 2a | -0,7 | 0,0 | 1,4 | 2,1 | 88 |
| 2b | -0,9 | -0,1 | 1,7 | 2,6 | 95 |
| 3a | -0,5 | 0,1 | 0,9 | 1,4 | 59 |

(fortgesetzt)

| Bspl. | Curl 10°C/20%rF [mm] | Curl 23°C/50%rF [mm] | Curl 32°C/80%rF [mm] | Δ Curl [mm] | WI |
|---|---|---|---|---|---|
| 3b | -0,8 | 0,1 | 1,3 | 2,1 | 65 |
| 4a | -0,6 | 0,0 | 1,2 | 1,8 | 55 |
| 4b | -0,8 | 0,2 | 1,3 | 2,1 | 72 |
| V1 | -3,0 | 0,1 | 4,2 | 7,2 | 1520 |
| V2 | -4,5 | 0,2 | 5,2 | 9,7 | 1980 |
| Curl: Mittelwert von 4 Ecken, gemessen von der Auflage (+: VS, -:RS); Delta (Δ) Curl: Curl 10°/20% relative Feuchte (rF) - Curl 32°/ 80% relative Feuchte; Welligkeitsindex: Anzahl Wellen/2m x mittlere Wellenamplitude [mm] x mittlere Wellentiefe in CD [cm]; Steigende Temperatur: delta positiv.; Steigende Luftfeuchtigkeit: delta negativ. | | | | | |

Wie aus der Tabelle ersichtlich weisen die erfindungsgemäßen Grafikfolien einen niedrigen Welligkeit-Index und ein besseres Curl-Verhalten als herkömmliche Grafikfolien auf.


**Patentansprüche**

1. Mehrschichtige Grafikfolie, die eine bedruckbare selbstklebende thermoplastische Folie und ein Trennpapier umfaßt, **dadurch gekennzeichnet, daß** das Trennpapier ein Trägermaterial enthält, das auf mindestens einer Seite mit einer Polymerfolie beschichtet ist, die ein Verhältnis der Elastizitätsmoduli in Längs- zu Querrichtung (MD/TD) von < 1 aufweist, gemessen nach DIN 53455.

2. Mehrschichtige Grafikfolie nach Anspruch 1, **dadurch gekennzeichnet, daß** das Verhältnis MD/TD in einem Bereich von 0,3 bis 0,8 liegt.

3. Mehrschichtige Grafikfolie nach Anspruch 1 oder 2, **dadurch gekennzeichnet, daß** die Polymerfolie eine Polyolefinfolie ist.

4. Mehrschichtige Grafikfolie nach Anspruch 3, **dadurch gekennzeichnet, daß** die Polyolefinfolie eine biaxial orientierte Polypropylenfolie ist.

5. Mehrschichtige Grafikfolie nach einem der Ansprüche 1 bis 4, **dadurch gekennzeichnet, daß** die Polymerfolie auf der Rückseite des Trägermaterials angeordnet ist.

6. Mehrschichtige Grafikfolie nach einem der Ansprüche 1 bis 5, **dadurch gekennzeichnet, daß** die Polymerfolie auf der Rückseite und auf der Vorderseite des Trägermaterials angeordnet ist.

7. Mehrschichtige Grafikfolie nach einem der Ansprüche 1 bis 6, **dadurch gekennzeichnet, daß** die Dicke der Polymerfolie 7 bis 50 μm, insbesondere 10 bis 35 μm, beträgt.

8. Mehrschichtige Grafikfolie nach einem der Ansprüche 1 bis 7, **dadurch gekennzeichnet, daß** das Trägermaterial ein auf mindestens einer Seite mit Polyolefin beschichtetes Rohpapier ist.

9. Mehrschichtige Grafikfolie nach Anspruch 8, **dadurch gekennzeichnet, daß** das Trägermaterial mit einem Polyolefin niedriger Dichte (LDPE) beschichtet ist.

10. Mehrschichtige Grafikfolie nach Anspruch 8, **dadurch gekennzeichnet, daß** das Rohpapier auf der Vorderseite mit einer 10 bis 90 Gew.% HDPE enthaltenden Polyethylenmischung beschichtet ist.

11. Mehrschichtige Grafikfolie nach Anspruch 10, **dadurch gekennzeichnet, daß** das Auftragsgewicht der Polyethylenmischung hoher Dichte 5 bis 35 g/m$^2$, insbesondere 15 bis 25 g/m$^2$, beträgt.

**12.** Mehrschichtige Grafikfolie nach einem der Ansprüche 1 bis 11, **dadurch gekennzeichnet, daß** die bedruckbare thermoplastische Folie eine Polyesterfolie oder eine Vinylfolie ist.

**Claims**

**1.** Multi-layer graphic film comprising a printable self-adhesive thermoplastic film and a release liner, **characterized in that** the release liner contains a support material coated on at least one side with a polymer film, which has a ratio of the elasticity modules in longitudinal- and transverse direction (MD/TD) of < 1, measured according to DIN 53455.

**2.** Multi-layer graphic film in accordance with claim 1, **characterized in that** the ratio MD/TD is in a range of 0.3 to 0.8.

**3.** Multi-layer graphic film in accordance with claim 1 or 2, **characterized in that** the polymer film is a polyolefin film.

**4.** Multi-layer graphic film in accordance with claim 3, **characterized in that** the polyolefin film is a biaxially oriented polypropylene film.

**5.** Multi-layer graphic film in accordance with one of the claims 1 to 4, **characterized in that** the polymer film is arranged on the backside of the support material.

**6.** Multi-layer graphic film in accordance with one of the claims 1 to 5, **characterized in that** the polymer film is arranged on the backside and on the front side of the support material.

**7.** Multi-layer graphic film in accordance with one of the claims 1 to 6, **characterized in that** the thickness of the polymer film is 7 to 50 $\mu$m, especially 10 to 35 $\mu$m.

**8.** Multi-layer graphic film in accordance with one of the claims 1 to 7, **characterized in that** the support material is a raw paper coated with polyolefin on at least one side.

**9.** Multi-layer graphic film in accordance with claim 8, **characterized in that** the support material is coated with a low-density polyolefin (LDPE).

**10.** Multi-layer graphic film in accordance with claim 8, **characterized in that** the raw paper is coated on the front side with a polyethylene mixture containing 10 to 90 percent-by-weight HDPE.

**11.** Multi-layer graphic film in accordance with claim 10, **characterized in that** the application weight of the high-density polyethylene is 5 to 35 g/m$^2$, especially 15 to 25 g/m$^2$.

**12.** Multi-layer graphic film in accordance with one of the claims 1 to 11, **characterized in that** the printable thermoplastic film is a polyester film or a vinyl film.

**Revendications**

**1.** Feuille graphique multicouche qui comprend une feuille thermoplastique autocollante imprimable et un papier de séparation,
**caractérisée en ce que**
le papier de séparation contient un matériau de support qui est revêtu sur au moins une face par une feuille polymère dont le rapport entre les modules d'élasticité dans la direction longitudinale et la direction transversale (MD/TD), mesuré selon DIN 53 455, est < 1.

**2.** Feuille graphique multicouche selon la revendication 1, **caractérisée en ce que** le rapport MD/TD est compris dans la plage de 0,3 à 0,8.

**3.** Feuille graphique multicouche selon les revendications 1 ou 2, **caractérisée en ce que** la feuille polymère est une feuille de polyoléfine.

**4.** Feuille graphique multicouche selon la revendication 3, **caractérisée en ce que** la feuille de polyoléfine est une feuille de polypropylène orientée biaxialement.

**5.** Feuille graphique multicouche selon l'une des revendications 1 à 4, **caractérisée en ce que** la feuille polymère est disposée sur le côté arrière du matériau de support.

**6.** Feuille graphique multicouche selon l'une des revendications 1 à 5, **caractérisée en ce que** la feuille polymère est disposée à la fois sur le côté arrière et sur le côté avant du matériau de support.

**7.** Feuille graphique multicouche selon l'une des revendications 1 à 6, **caractérisée en ce que** l'épaisseur de la feuille polymère est comprise entre 7 et 50 $\mu$m et en particulier entre 10 et 35 $\mu$m.

**8.** Feuille graphique multicouche selon l'une des revendications 1 à 7, **caractérisée en ce que** le matériau de support est un papier brut revêtu de polyoléfine sur au moins une face.

**9.** Feuille graphique multicouche selon la revendication 8, **caractérisée en ce que** le matériau de support est revêtu d'une polyoléfine basse densité (LDPE).

**10.** Feuille graphique multicouche selon la revendication 8, **caractérisée en ce que** le papier brut est revêtu sur sa face avant d'un mélange de polyéthylène qui contient de 10 à 90 % en poids de HDPE.

**11.** Feuille graphique multicouche selon la revendication 10, **caractérisé en ce que** le poids appliqué du mélange de polyéthylène à haute densité est de 5 à 35 g/m$^2$ et en particulier de 15 à 25 g/m$^2$.

**12.** Feuille graphique multicouche selon l'une des revendications 1 à 11, **caractérisée en ce que** la feuille thermoplastique imprimable est une feuille de polyester ou une feuille de vinyle.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5154956 A
- EP 0687702 A1
- EP 1116745 A1
- US 6030742 A
- US 3741841 A